(19) Europäisches Patentamt
European Patent Office
Office européen des brevets

(11) EP 1 919 925 B1

(12) EUROPÄISCHE PATENTSCHRIFT

(45) Veröffentlichungstag und Bekanntmachung des Hinweises auf die Patenterteilung:
**15.01.2020 Patentblatt 2020/03**

(21) Anmeldenummer: **06778294.6**

(22) Anmeldetag: **21.08.2006**

(51) Int Cl.:
***C07F 3/06*** *(2006.01)*

(86) Internationale Anmeldenummer:
**PCT/EP2006/065506**

(87) Internationale Veröffentlichungsnummer:
**WO 2007/020298 (22.02.2007 Gazette 2007/08)**

(54) **HOCHREAKTIVE ZINKFORM, VERFAHREN ZU DEREN HERSTELLUNG UND VERWENDUNG DER HOCHREAKTIVEN ZINKFORM**

HIGHLY REACTIVE ZINC FORM, METHOD FOR THE PRODUCTION THEREOF, AND USE OF THE SAME

FORME DE ZINC HAUTEMENT REACTIVE, SON PROCEDE DE PRODUCTION, ET SON UTILISATION

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **19.08.2005 DE 102005039628**
**25.08.2005 DE 102005040391**

(43) Veröffentlichungstag der Anmeldung:
**14.05.2008 Patentblatt 2008/20**

(73) Patentinhaber: **Chemetall GmbH**
**60487 Frankfurt (DE)**

(72) Erfinder:
- **LANG, Sebastian**
  **65929 Frankfurt Am Main (DE)**
- **MURSO, Alexander**
  **60489 Frankfurt Am Main (DE)**
- **WIETELMANN, Ulrich**
  **61381 Friedrichsdorf (DE)**

(74) Vertreter: **BASF IP Association**
**BASF SE**
**G-FLP-C006**
**67056 Ludwigshafen (DE)**

(56) Entgegenhaltungen:
**EP-A1- 0 252 766** **DE-C1- 10 024 776**
**US-A- 5 756 653** **US-A1- 2004 236 155**

- **K. TAKAI, T. KAKIUCHI, K. UTIMOTO: "A Dramatic Effect of a Catalytic Amount of Lead on the Simmons-Smith Reaction and Formation of Alkylzinc Compounds from Iodoalkanes. Reactivity of Zinc Metal: Activation and Deactivation" JOURNAL OF ORGANIC CHEMISTRY, Bd. 59, 1994, Seiten 2671-2673, XP002410353 American Chemical Society**
- **C. JOUBERT, P. KNOCHEL: "Preparation of New Classes of Aliphatic, Allylic, and Benzylic Zinc and Copper Reagents by the Insertion of Zinc Dust into Organic Halides, Phosphates, and Sulfonates" JOURNAL OF ORGANIC CHEMISTRY, Bd. 57, 1992, Seiten 5425-5431, XP002410354 American Chemical Society**

EP 1 919 925 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Gegenstand der Erfindung ist eine hochreaktive Zinkform, ein Verfahren zu deren Herstellung und die Verwendung der hochreaktiven Zinkform in der Synthesechemie.

Zinkorganische Verbindungen finden in der organischen Synthese vielfältige Anwendungen. Die wohl bekanntesten Beispiele für solche Anwendungen sind die Reformatsky-, Simmons-Smith- und Negishi-Reaktion. Über zinkorganische Verbindungen (Zinkorganyle) lassen sich hochfunktionalisierte Stoffe herstellen, die wichtige Ausgangsstoffe zur Herstellung von Pharmazeutika, Naturstoffderivaten, Polymermaterialien, Agrochemikalien, Spezialitäten und Katalysatoren sind. Im Gegensatz zu anderen metallorganischen Verbindungen tolerieren Zinkorganyle eine Vielzahl von funktionellen Gruppen, was Zinkorganyle zu einer einzigartigen Verbindungsklasse macht und von weiteren metallorganischen Reagenzien abhebt. Ein weiterer Unterschied zu anderen metallorganischen Verbindungen besteht darin, dass zinkorganische Verbindungen in Gegenwart geeigneter Katalysatoren oftmals stereo- und regioselektiv mit organischen Substraten reagieren (P. Knochel, P. Jones in Organozinc Reagents (Editoren: L. M. Harwwod, C. J. Moody), Oxford; University Press Inc., New York, 1999 und darin enthaltene Zitate; A. Fürstner, Active Metals, VCH, Weinheim, New York, 1996 und darin enthaltene Zitate).

Zur Herstellung von zinkorganischen Verbindungen sind unter anderem die nachfolgend beschriebenen Verfahren offenbart:

1. Herstellung von zinkorganischen Verbindungen über Transmetallierung

Durch Transmetallierungen von Zinkhalogeniden mit lithium-, magnesium-, oder aluminiumorganischen Verbindungen entstehen zinkorganische Verbindungen. Das Hauptproblem dieses Verfahrens besteht jedoch darin, dass die Anwesenheit vieler wünschenswerter funktioneller Gruppen wie beispielsweise Ester, Ketone, Nitrile, etc. im organischen Fragment durch die Inkompatibilität vieler dieser Gruppen mit derartigen metallorganischen Verbindungen ausgeschlossen ist (Schema 1).

Schema 1: Herstellung von zinkorganischen Verbindungen über Transmetallierung:

$$RLi + ZnX_2 \longrightarrow RZnX + LiX \xrightarrow{+ RLi} R_2Zn + LiX$$

$$RMgY + ZnX_2 \longrightarrow RZnX + MgXY \xrightarrow{+ RMgY} R_2Zn + MgXY$$

$$2\,R_3Al + 3\,ZnX_2 \longrightarrow 3\,R_2Zn + 2\,AlX_3$$

X, Y = Halogen; R = organischer Rest

2. Komproportionierungsreaktion zur Herstellung von zinkorganischen Verbindungen

Eine Herstellung durch Komproportionierung einer Diorganozinkverbindung mit einem Zinksalz führt ebenfalls zu zinkorganischen Verbindungen. Die Anwendung dieses Verfahrens wird jedoch durch die Verfügbarkeit und Herstellungsmöglichkeit der Diorganozinkspezies begrenzt (Schema 2).
Schema 2: Komproportionierungsreaktion zur Herstellung von zinkorganischen Verbindungen:

$$R_2Zn + ZnX_2 \rightarrow 2\,RZnX$$

X = Halogen; R = organischer Rest

3. Iod/Zink-Austauschreaktion

Zinkorganische Verbindungen können außerdem über Iod/Zink- oder auch Bor/Zink-Austauschreaktionen hergestellt werden. Über Iod/Zink Austauschreaktionen lassen sich Alkyliodide durch Behandlung mit Dialkylzinkreagenzien in die entsprechenden zinkorganischen Verbindungen umwandeln. Dieses Verfahren ist jedoch auf Alkyliodide, die teilweise kommerziell nicht erhältlich, oftmals instabil und zusätzlich teuer sind, beschränkt und somit nicht generell anwendbar (Schema 3).

Schema 3: Iod/Zink-Austauschreaktion:

$$2\ RI + Et_2Zn \rightarrow R_2Zn + 2\ EtI$$

R = organischer Rest

4. Bor/Zink-Austauschreaktionen

Durch Reaktionen von Alkenen in einer Hydroborierungsreaktion mit Diethylboran, gefolgt von einer Umsetzung mit einer Dialkylzinkverbindung erhält man ebenfalls die entsprechenden zinkorganischen Verbindungen. Nachteilig an diesem Verfahren ist die zwingend notwendige Hydroborierungsreaktion, die einen zusätzlichen Syntheseschritt in der Herstellung von zinkorganischen Verbindungen darstellt. Zudem ist sie - durch die Beschränkung auf Alkene - auf die Herstellung von Alkylzinkverbindungen begrenzt (Schema 4).

Schema 4: Bor/Zink-Austauschreaktionen:

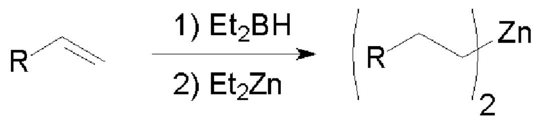


R = organischer Rest

Sowohl für die Iod/Zink- als auch die Bor/Zink-Austauschreaktion wird zudem eine Dialkylzinkverbindung zur Herstellung einer anderen zinkorganischen Verbindung benötigt.

5. Thermische Disproportionierung eines Organozinkhalogenides

Ein weiteres Verfahren zur Herstellung von Diorganozinkverbindungen stellt die thermisch induzierte Disproportionierung von Organozinkhalogeniden dar. Dieses Verfahren setzt jedoch die Verfügbarkeit eines entsprechenden Organozinkhalogenides voraus (Schema 5).

Schema 5: Thermische Disproportionierung eines Organozinkhalogenides:

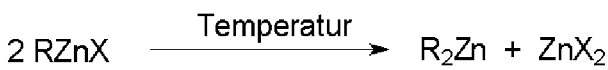


X = Halogen; R = organischer Rest

6. Oxidative Addition zur Herstellung von zinkorganischen Verbindungen

Das theoretisch einfachste Verfahren zur Herstellung zinkorganischer Verbindungen stellt die oxidative Addition von Zink an organische Halogenide dar. Es werden keine zinkorganischen oder andere metallorganischen Verbindungen zur Synthese vorausgesetzt (Schema 6), (P. Knochel, P. Jones in Organozinc Reagents (Editoren: L. M. Harwwod, C. J. Moody), Oxford; University Press Inc., New York, 1999 und darin enthaltene Zitate; A. Fürstner, Active Metals, VCH, Weinheim, New York, 1996 und darin enthaltene Zitate).

Schema 6: Oxidative Addition zur Herstellung von zinkorganischen Verbindungen:

$$RX + Zn \rightarrow RZnX$$

X = Halogen; R = organischer Rest

Problematisch an diesem Verfahren ist jedoch das eingesetzte Zink, hier das "technische" Zinkmetall. Technisches Zinkmetall, unabhängig von der Korngröße oder Oberflächenbeschaffenheit, ist mit einer das Metall passivierenden Schicht überzogen, die das Metall hinsichtlich einer oxidativen Addition, insbesondere hinsichtlich einer oxidativen Addition an organische Halogenide, deaktiviert.

Aufgrund der passivierenden Schicht ist eine oxidative Addition von technischem Zink an organische Halogenide

meistens nur bei vorheriger Behandlung des Metalls mit geeigneten Verfahren und zusätzlich nur mit speziell ausgewählten hochreaktiven organischen Bromiden, beispielsweise Allylbromid, oder Iodiden möglich.

Es wurden daher viele Anstrengungen unternommen, um das wenig reaktive Zink zu aktivieren, um eine oxidative Addition an organische Iodide zu beschleunigen und an Bromide zu ermöglichen (P. Knochel, P. Jones in Organozinc Reagents (Editoren: L. M. Harwwod, C. J. Moody), Oxford; University Press Inc., New York, 1999 und darin enthaltene Zitate; A. Fürstner, Active Metals, VCH, Weinheim, New York, 1996 und darin enthaltene Zitate; E. Erdik, Tetrahedron 1987, 43, 2203).

Nachfolgend wird vereinfachend von Zinkformen gesprochen, wenn das Zinkmetall in aktivierter Form vorliegt.

So sind zur Entfernung der passivierenden Oberfläche von technischem Zink verschiedene Waschverfahren beschrieben. Eine Möglichkeit besteht im Waschen des Metalls mit verdünnter wässriger Salzsäurelösung, mit Wasser und abschließend mit Aceton und Ether. Ein weiteres Verfahren stellt das Waschen mit verdünnter wässriger Natronlauge, dann mit verdünnter Essigsäure, Wasser und abschließend mit Aceton und Ether dar. Auch durch Waschen von Zinkmetall mit gesättigter Ammoniumchloridlösung, anschließendem Dekantieren der Waschlösung, Spülen des Rückstandes mit Wasser und abschließend mit Ethanol, Ether und Dimethylformamid führt zur Entfernung der passivierten Oberfläche von Zinkmetall. Bei diesen Waschverfahren muss die so erhaltene Zinkform vor Verwendung am Vakuum getrocknet werden.

Diese Verfahren zur Aktivierung von Zinkmetall sind durch die vielen verschiedenen Waschschritte und abschließender Trocknung des aktivierten Zinks aufwendig und liefern zudem Zinkformen, die für oxidative Additionen nur bedingt verwendbar sind, beispielsweise bei Reaktionen mit stark aktivierten Iodoalkylestern, $\alpha$-Bromoestern, $\alpha$-Bromonitrilen, Benzylhalogeniden oder in Reformatsky-Reaktionen. Zudem hängt die Effizienz dieser Aktivierungsmethoden stark von der Art, das heißt von der Oberflächengröße und -beschaffenheit des verwendeten Zinkmetalls ab. Je nach Reaktivität des organischen Halogenids führt entweder die Verwendung von elektrolytisch hergestellten Zinkspänen, Zinkstaub oder Zinkwolle zu den gewünschten Produkten in zufrieden stellenden Ausbeuten. Der Einsatz von Zinkstaub hat darüber hinaus den Nachteil, dass der Zinkstaub nur schwer von der Reaktionslösung abtrennbar ist.

Die Verwendung von Zinkformen wie den sogenannten "Zink-Kupfer-Paaren" oder "Zink-Silber-Paaren" ist auf Simmons-Smith-Reaktionen und Reaktionen mit stark aktivierten Alkyliodiden begrenzt. Das klassische "Zink-Kupfer-Paar" erhält man durch Behandlung von Zinkmetall mit Salzsäure und Wasser wie oben angeführt, anschließender Zugabe von Kupfersulfatlösung und wiederholtes Waschen des so behandelten Zinkmetalls mit Wasser und Ether. Zur Herstellung eines Zink-Silber-Paares wird anstelle von Kupfersulfat Silberacetat in Essigsäure verwendet. Vor Verwendung in der Synthese müssen diese Zinkformen am Vakuum getrocknet werden. Nachteilig an der Verwendung von klassisch hergestellten Zink-Kupfer-Paaren oder Zink-Silber-Paaren ist somit nicht nur deren begrenzte Einsatzmöglichkeiten und die durch die komplexe herstellungsbedingte schwankende Qualität der Aktivierung, sondern auch deren aufwendige Herstellung, Trocknung und Entsorgung der kontaminierten Waschlösungen. Ein weiteres "Zink-Kupfer-Paar" erhält man durch Refluxieren einer Mischung aus Zinkmetall und Kupferhalogeniden in Ethern. Das eingesetzte Kupferhalogenid kann auch durch metallisches Kupferpulver ersetzt werden, jedoch führt die Verwendung von Kupfer zu schlechteren Ausbeuten. Diese Zinkform zeigt sich in Simmons-Smith-Reaktionen reaktiver als das klassisch hergestellte Zink-Kupfer-Paar, ist jedoch ebenfalls nur auf Simmons-Smith-Reaktionen und Reaktionen mit stark aktivierten Alkyliodiden begrenzt (E. Erdik, Tetrahedron 1987, 43, 2203; R. J. Rawson et al. J. Org. Chem. 1970, 35, 2057).

Die Verwendung von Alanen oder Alkalimetall- bzw. Erdalkalimetallaluminiumhydriden in Cyclopropanierungsreaktionen (Simmons-Smith-Reaktionen) ist in US-A-4,472,313 offenbart. Durch dieses Verfahren sind Simmons-Smith-Reaktionen ohne aufwendige Herstellung eines Zink-Kupfer-Paares möglich, jedoch ist das Verfahren ebenfalls nur auf Simmons-Smith-Reaktionen beschränkt.

Weitere Verfahren zur Herstellung von aktiviertem Zink sind das Anätzen von Zinkmetall mit Iod, Alkylmagnesiumhalogeniden, Trimethylsilylchlorid, Dialkylaluminiumchlorid oder 1,2-Dibromethan und Trimethylsilylchlorid. Durch diese Reagenzien werden Zinkformen erzeugt, die lediglich oxidative Additionen von Zink an Alkyliodide und an stark aktivierte Alkylbromide, wie beispielsweise $\alpha$-Bromestern ermöglichen und die außerdem nur noch in Reformatsky- und Simmon-Smith-Reaktionen verwendet werden können.

Auch eine Behandlung von metallischem Zink mit Ultraschall führt zu aktiviertem Zink. Wird die Ultraschallbehandlung bei gleichzeitiger Anwendung eines der oben angeführten Ätzverfahren durchgeführt, ist diese Zinkform reaktiver als ohne Ultraschallbehandlung, unterliegt jedoch trotzdem den gleichen Anwendbarkeitsgrenzen hinsichtlich der Umsetzung mit organischen Halogeniden. So ist auch diese Zinkform nur für Insertionen von Zink in stark aktivierte organische Bromide, in Iodide oder in Reformatsky-Reaktionen verwendbar.

Trotz dieser zahlreichen und unterschiedlichen Verfahren zur Herstellung von aktiviertem Zink ist eine oxidative Addition somit nur mit reaktiven organischen Halogeniden, wie beispielsweise Iodiden, $\alpha$-Haloestern oder a, $\beta$-ungesättigten Bromiden möglich. Die meisten Alkylbromide oder -chloride, Vinyl- oder Allylhalogenide und Arylhalogenide reagieren nicht oder nur sehr langsam mit den oben beschriebenen Zinkformen.

Auch aus der Patentliteratur sind dem Fachmann eine Reihe von Verfahren zur Herstellung von aktiviertem Zink bekannt.

So offenbart WO 03/004504 A1 die Synthese von Arylzinkhalogeniden durch Verwendung von technischem Zinkmetall, einem cobalthaltigem Katalysator, einem Zinksalz, einer organischen Säure und eines in katalytischen Mengen vorhandenen weiteren Arylhalogenides. Nachteilig an diesem Verfahren ist die Verwendung eines zusätzlichen halogenierten Aromaten, beispielsweise Brombenzol. Die Anwesenheit von Brombenzol als Additiv in der Reaktionsmischung führt zur Bildung von stark toxischem, cancerogenen Benzol. Die Verwendung katalytischer Mengen anderer Arylhalogenide als Additiv führt ebenfalls zur Bildung unerwünschter Nebenprodukte. Verwendet man anstelle katalytischer Mengen eines Arylhalogenides Allylchlorid, so können zwar ebenfalls Arylzinkhalogenide hergestellt werden, jedoch finden sich in der Produktlösung Verunreinigungen, die auf die Anwesenheit von Allylchlorid zurückzuführen sind (C. Gosmini, J. Am. Chem. Soc. 2003, 125, 3867; C. Gosmini, Tetrahedron Lett. 2003, 44, 6417). Weiterhin nachteilig ist die Anwesenheit einer organischen Säure, da kein reines Produkt entsteht und die Säure bzw. deren nach der Reaktion gebildete Derivate nur schwer vom gewünschten Hauptprodukt abgetrennt werden können. Außerdem kann dieses Verfahren nur in ausgewählten Lösungsmitteln, wie beispielsweise Acetonitril, durchgeführt werden. Zudem ist diese Methode nur für $sp^2$-hybridisierte Kohlenstoffatome anwendbar.

SU-A-1775403 offenbart die Synthese von hochreinem Diethylzink über eine thermische Disproportionierung von Ethylzinkbromid. Ethylzinkbromid wird durch Reaktion von Ethylbromid mit Zinkpulver in Gegenwart eines die Reaktion katalysierenden Systems hergestellt. Als katalysierende Systeme finden Alkylzinkhalogenide oder Dialkylzinkverbindungen in Kombination mit Zinkhydroxid und/oder Übergangsmetallverbindungen Anwendung. Zwar liefert dieses Verfahren gute Ausbeuten an Diethylzink, jedoch findet man bei der Herstellung sekundärer und längerkettiger Dialkylzinkverbindungen deutlich niedrigere Ausbeuten. Die Anwendung dieses Verfahrens zur Herstellung sekundärer und längerkettiger Dialkylzinkverbindungen erfordert zusätzlich noch lange Reaktionszeiten (I. V. Eremeev, Rus. J. Appl. Chem. 2001, 74, 1410). Die geringen Ausbeuten zeigen zudem, dass die längerkettigen Dialkylzinkverbindungen entweder verunreinigt sind oder noch nicht umgesetztes Alkylhalogenid enthalten. Um reine Produktlösungen zu erhalten, sind somit technisch aufwendige Reinigungsschritte nötig.

DE-C-100 24 776 und EP-A-1 031 634 offenbaren ein weiteres Verfahren zur Herstellung von aktiviertem Zink. Es wird die Behandlung von schmelzflüssigem Zink mit Metallhydriden beschrieben. Die so erhaltene Zinkform hat sich als für Simmons-Smith-Reaktionen geeignet erweisen. Das Verfahren bedingt jedoch ein Aufschmelzen von Zinkmetall und eine anschließende Mahlung, was technisch aufwendig, zeitintensiv und kostspielig ist.

Um eine Zinkform zu erhalten, die in oxidativen Additionsreaktionen an organische Halogenide generell anwendbar ist, muss diese Zinkform, hier "spezielles Zink" genannt, über aufwendige und teure Verfahren hergestellt werden, die nachfolgend beschrieben sind. Spezielles Zink ist eine aktiviertes Zink, das nicht durch die oben beschriebenen Verfahren des Standes der Technik zur Synthese zinkorganischer Verbindungen aktiviert werden muss. Spezielles Zink weist keine das Zinkmetall passivierende Schicht auf. Eines dieser Verfahren zur Herstellung dieser Zinkform besteht in der Metall / Lösungsmittel Co-Kondensation. Dabei wird technisches Zinkmetall in einer Lösungsmittelatmosphäre üblicherweise durch eine elektrische Widerstandsheizquelle unter Unterdruck verdampft und an mit flüssigem Stickstoff oder Helium gekühlten Oberflächen kondensiert. Es bilden sich ultrafeine, nanoskalige Metallatomcluster, die im Lösungsmittel als Schlamm anfallen. Dieses Verfahren liefert zwar eine Zinkform, die sehr reaktiv ist, es ist jedoch aufgrund der extrem hohen Temperaturen, die zur Metallverdampfung nötig sind, der Handhabung tiefkalter Flüssiggase zur Kondensation des Metalls und der Durchführung im Vakuum technisch sehr aufwendig, damit extrem kostspielig und nur zur Herstellung kleinerer Mengen an aktiviertem Zink geeignet (A. Fürstner, Active Metals, VCH, Weinheim, New York, 1996 und darin enthaltene Zitate).

Verfahren einer elektrochemischen Synthese von Aryl- oder Vinylzinkhalogeniden in einem Opferanodenprozess, oder in Gegenwart eines Katalysators, bei denen spezielles Zink in situ hergestellt wird, sind ebenfalls bekannt, bringen aber die Nachteile mit sich, die generell mit elektrochemischen Prozessen assoziiert sind. So sind derartige Verfahren relativ kostspielig und bedingen einen großen technischen Aufwand. Größere Mengen an speziellem Zink sind über diese Verfahren nur schwer herstellbar. Zudem sind derartige Verfahren auf die Herstellung von Aryl- und Vinylzinkhalogeniden beschränkt (Editoren: L. M. Harwwod, C. J. Moody), Oxford; University Press Inc., New York, 1999 und darin enthaltene Zitate; WO 01/02625 A1; H. Fillon et al., Tetrahedron Lett. 2001, 42, 3843; C. Gosmini et al. J. Org. Chem. 2000, 65, 6024).

Ein weiteres Verfahren zur Herstellung von speziellem Zink wird von Rieke beschrieben (P. Knochel, P. Jones in Organozinc Reagents (Editoren: L. M. Harwwod, C. J. Moody), Oxford; University Press Inc., New York, 1999 und darin enthaltene Zitate; A. Fürstner, Active Metals, VCH, Weinheim, New York, 1996 und darin enthaltene Zitate). Diese Zinkform (nachfolgend auch Rieke®Zink genannt) wird durch Reduktion eines Zinksalzes - beispielsweise $ZnCl_2$, oder $Zn(CN)_2$ - mit einem Alkalimetall - vorzugsweise Li - in Gegenwart stöchiometrischer oder katalytischer Mengen eines Elektronencarriers (beispielsweise Naphthalin) erzeugt und fällt als fein verteiltes hochreaktives Pulver an (Schema 7).

Schema 7: Herstellung von Rieke®Zink

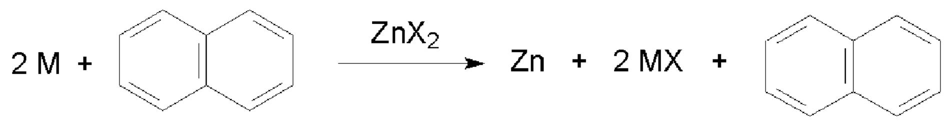

M = Li, Na, K; X = Halogen, CN, $SO_4$, $NO_3$, $NO_2$, OAc

Typische Partikelgrößen der Zinkformen, die nach dem Rieke®Verfahren hergestellt wurden (Rieke®Zink), liegen zwischen ein und zwei µm bis hinunter in den Nanometer-Bereich. Die Größe der entstehenden Partikel hängt stark von der Art der Herstellung des Rieke®Zink ab, beispielsweise von der Zugabegeschwindigkeit der Reagenzien oder der Rührgeschwindigkeit und den verwendeten Alkalimetallen und Zinksalzen. Fällt das Zinkpulver nicht in fein verteilter Form an, zeigt es eine geringere Reaktivität. Herstellungsbedingt ist Rieke®Zink mit dem Alkalisalz, das zur Reduktion verwendet wurde und durch weitere Begleitstoffe, die durch die ablaufenden Redoxprozesse entstehen, verunreinigt.

Beim Rieke®Verfahren werden pro Mol hergestelltem Zinkmetall etwa zwei Mol Alkalimetall oxidiert (US-A-5,964,919; WO 93/15086 A1). Das fein verteilte Metallpulver fällt zusammen mit großen Mengen Alkalisalz an. Verwendet man also Rieke®Zink in oxidativen Additionsreaktionen und will reines Produkt erhalten, so muss das nach dem Rieke®Verfahren hergestellte Zink erst gereinigt werden. Durch mehrmaliges Waschen mit geeigneten organischen Lösungsmitteln sind die Alkalimetallsalze nur schwer und unvollständig vom Zinkmetall abtrennbar. Die geringen Partikelgrößen von Rieke®Zink bedingen zudem eine technisch äußerst aufwendige Reinigung des Metalls, da Zentrifugation und Filtration nur bedingt zur Aufarbeitung geeignet sind. Zusätzlich beeinflusst die Art des Anions im Alkalimetallsalz stark die Reaktivität des Rieke®Zinks in oxidativen Additionsreaktionen. Dabei ist die Gegenwart von Alkalimetallsalzen für Umsetzungen mit weniger reaktiven Substraten zwingend notwendig. Somit muss eine Alkalimetallsalzverunreinigung in der Produktlösung teilweise hingenommen werden. Zur Veranschaulichung der entstehenden Mengen an Alkalimetallsalz bei der Herstellung von Rieke®Zink sind in der folgenden Tabelle 1 die Mengen an Alkalimetallsalz bei Verwendung von Lithium, Natrium und Kalium zur Reduktion von Zinkchlorid angeführt. Die Berechnungen basieren auf 100 % Umsatz und der Herstellung von einem Kilogramm Rieke®Zink.

Tabelle 1: Mengen an Alkalimetallsalz, bei der Herstellung von 1 kg (15,3 mol) Rieke®Zink aus Zinkchlorid:

| Metall | eingesetzte Stoffmenge [mol] | entstehendes Salz | Molmasse des Salzes [g/mol] | anfallende Menge an Salz für ein kg Rieke®Zink [kg] |
|---|---|---|---|---|
| Li | 30,6 | LiCl | 42,39 | 1,3 |
| Na | 30,6 | NaCl | 58,44 | 1,8 |
| K | 30,6 | KCl | 74,55 | 2,3 |

Die Nachteile aller oben geschilderten Methoden zur Herstellung von aktivierten Zink liegen darin, dass sie entweder relativ aufwendig und kostspielig oder nur beschränkt anwendbar und/oder wirksam sind und/oder zu nicht reproduzierbaren oder schlechten Ausbeuten führen. Das technische Problem einer effizienten und wirtschaftlichen Herstellung von zinkorganischen Verbindungen über eine oxidative Addition an organische Halogenverbindungen, die nicht mit den erwähnten Nachteilen behaftet ist, ist somit bisher nicht gelöst.

Weiterhin ist aus dem Dokument US 5,756,653 ein Verfahren zur Herstellung von Polymeren bekannt, bei dem eine nullwertige, hoch reaktive Zinkform mit einer organischen Verbindung umgesetzt wird, welche mindestens zwei Abgangsgruppen besitzt und in der Lage ist, ein Mono-Zink-Derivat zu bilden. Das organische Radikal des OrganoZink-Reagens ist eine substituierte Thiophengruppe und kann durchZugabe eines Pd(0)-Katalysators oder eines Ni(II)-Katalysators polymerisiert werden.

Aufgabe der vorliegenden Erfindung ist es daher, die Nachteile des Standes der Technik zu überwinden.

Insbesondere Aufgabe der vorliegenden Erfindung ist es, ein hochreaktives Zinkmetall zur Verfügung zu stellen.

Aufgabe der vorliegenden Erfindung ist es daher, die Nachteile des Standes der Technik zu überwinden.

Aufgabe der Erfindung ist es, ein Verfahren zur Herstellung des hochreaktiven Zinkmetalls zur Verfügung zu stellen.

Überraschenderweise wird die Aufgabe durch die Merkmale der Hauptansprüche 1 und 20 gelöst. Vorzugsweise Ausgestaltungen finden sich in den Unteransprüchen. Erfindungsgemäßwird eine Zinkform erhalten, die 50 bis 99,99, bevorzugt 80 bis 99,99 Gew.-% hochreaktives Zinkmetall enthält. Im Sinne der Erfindung ist "hochreaktives Zinkmetall" eine Zinkform, die reaktiver ist als unbehandeltes oder nach Stand der Technik aktiviertes technisches Zinkmetall. Die

erfindungsgemäße Zinkform weist eine vergleichbare Reaktivität wie die nach dem Rieke®Verfahren hergestellte spezielle fein verteilte Zinkform auf. Die erfindungsgemäße Zinkform ist hat aber eine gröbere Körnung als die nach dem Rieke®Verfahren hergestellte spezielle fein verteilte Zinkform. Insbesondere hat die erfindungsgemäße Zinkform eine Korngröße über 2 μm, bevorzugt eine Korngröße von 10 bis 500 μm, besonders bevorzugt von 50 bis 350 μm. Vorzugsweise ist die erfindungsgemäße Zinkform nicht durch Alkalihalogenide, -cyanide, -sulfate, -nitrate, -nitrite, -acetate und/oder andere Alkalisalze verunreinigt, die gemäß dem Stand der Technik zur Herstellung von Rieke®Zink verwendet werden.

Als Kriterium für die Reaktivität des erfindungsgemäßen Zinkform im Vergleich zu einer nach dem Rieke®Verfahren hergestellten Zinkform wurde die Geschwindigkeit und Ausbeute bei der Insertion in organische Bromverbindungen ausgewählt. Aus dem Stand der Technik ist bekannt, dass unbehandeltes oder auch herkömmlich aktiviertes technisches Zinkmetall nur in organische Iodverbindungen oder in besonders reaktive Bromverbindungen wie beispielsweise α,β- ungesättige organische Bromide insertiert. In oxidativen Additionsreaktionen gemäß Schema 6:

$$RX + Zn \rightarrow RZnX$$

X= Halogen; R = organischer Rest reagieren tertiäre organische Halogenide schneller als sekundäre und diese schneller als primäre. Funktionalisierte tertiäre, sekundäre oder primäre Halogenide reagieren in der Regel schneller als ihre unfunktionalisierten Analoga (P. Knochel, P. Jones in Organozinc Reagents (Editoren: L. M. Harwwod, C. J. Moody), Oxford; University Press Inc., New York, 1999 und darin enthaltene Zitate; A. Fürstner, Active Metals, VCH, Weinheim, New York, 1996 und darin enthaltene Zitate; R. D. Rieke et al., J. Chem. Soc. Chem. Commun. 1973, 269; R. D. Rieke, et al., Tetrahedron 1997, 1925; R. D. Rieke, et al., J. Org. Chem. 1996, 61, 2726; L. Zhu et al., J. Org. Chem. 1991, 56, 1445). Dementsprechend belegen hohe Ausbeuten und kurze Reaktionszeiten bei Verwendung der erfindungsgemäßen Zinkform in Umsetzungen mit bekannter weise reaktionsträgem n-Butylbromid als primärem organischem Halogenid die generelle Einsetzbarkeit der erfindungsgemäßen Zinkform in der metallorganischen Synthese.

Das erfindungsgemäße Verfahren zur Herstellung einer Zinkform erfolgt durch Umsetzung von technischem Zinkmetall mit einem Alkalialkoholat und/oder Erdalkalialkoholat der Kationen Lithium, Natrium, Kalium und Magnesium mit den Anionen MeO, EtO, n-PrO, iso-PrO, n-BuO, sec-BuO, iso-BuO, tert-BuO, Amylat(AmO) sowie Alkaliamide und Erdalkaliamide der Kationen Lithium, Natrium, Kalium und Magnesium mit den Anionen N(SiMe3)2, NMe2, NEt2, N(i-Pr)2, N(n-Pr)2, NH2 oder Mischungen aus diesen Verbindungen, wobei der Herstellmischung ein aprotisches organisches Lösungsmittel oder Lösemittelgemisch zugesetzt wird.

Weiterhin wurde überraschenderweise gefunden, dass die erfindungsgemäße Zinkform es ermöglicht, Zink auch in nicht aktivierte Kohlenstoff-Halogen-Bindungen zu insertieren.

Die erfindungsgemäße Zinkform ist insbesondere dadurch gekennzeichnet, dass sie mit n-Butylbromid in oxidativen Additionsreaktionen gemäß Schema 6 Ausbeuten von n-Butylzinkbromid größer 50 % innerhalb eines Zeitraumes von fünf Stunden bei Temperaturen unterhalb von 150°C liefert.

Die erfindungsgemäße Zinkform ermöglicht die direkte Herstellung einer großen Bandbreite an zinkorganischen Verbindungen, wie beispielsweise Zinkdialkyl-, Zinkdialkenyl-, Zinkdialkinyl-, Zinkdiaryl-, Zinkdiheteroaryl-, Zinkalkylaryl-, Zinkalkenylaryl-, Zinkalkinylaryl-, Zinkalkylalkenyl-, Zinkalkylalkinyl-, Zinkalkenylalkinyl-, Zinkheteroarylalkenyl-, Zinkheteroarylalkinyl-, Zinkheteroaryl alkyl-, Zinkalkylhalogenid-, Zinkalkenylhalogenid-, Zinkalkinylhalogenid-, Zinkheteroarylhalogenid-, Zinkarylhalogenid-, Zinkdihydrid-, Alkylzinkhydrid-, Alkenylzinkhydrid-, Alkinylzinkhydrid-, Arylzinkhydrid-, Zinkdialkylalkoxid-, Zinkdiarylalkoxid-, Zinkdiheteroarylalkoxid-, Zinkdialkenylalkoxid-, Zinkdialkinylalkoxid-, Alkylzinkalkylalkoxid-, Alkylzinkarylalkoxid-, Arylzinkalkylalkoxid-, Arylzinkarylalkoxid-, Zinkdialkylamid-, Zinkdiarylamid-, Alkylzinkalkylamid-, Alkylzinkarylamid-, Arylzinkalkylamid-, Arylzinkarylamid-Verbindungen. Diese zinkorganischen Verbindungen können zur Herstellung zahlreicher zum Teil hoch funktionalisierter Stoffe, wie Pharmazeutika, Naturstoffderivate, Polymermaterialien, Agrochemikalien, Spezialitäten und Katalysatoren verwendet werden.

Insbesondere ermöglicht die erfindungsgemäße Zinkform die direkte Herstellung von Zinkaryl-, Zinkheteroaryl-, Zinkalkyl-, Zinkalkenyl-, Zinkalkinylbromiden und/oder -iodiden.

Die folgende Tabelle gibt einen Überblick über zinkorganische Verbindungen, die über eine oxidative Addition einer nach dem Rieke®Verfahren hergestelltem Zinkform an organische Halogenide hergestellt wurden (R. D. Rieke et al., J. Chem. Soc. Chem. Commun. 1973, 269; R. D. Rieke, et al., Tetrahedron 1997, 1925; R. D. Rieke, et al., J. Org. Chem. 1996, 61, 2726; L. Zhu et al., J. Org. Chem. 1991, 56, 1445). Sie dient als Vergleich der Reaktivität von Rieke®Zink mit der erfindungsgemäßen Zinkform.

Tabelle 2: Ausgewählte Synthesen zinkorganischer Verbindungen über oxidative Addition mit Rieke®Zink

| Alkyl/Arylhalogenid | Zeit [h] | Temp. [°C] | Produkt der Umsetzung mit Zink | Ausbeute [%] |
|---|---|---|---|---|
| **primär** | | | | |
| 1-Brombutan | 3 | 90 | n-Butylzinkbromid | 97 |

(fortgesetzt)

| Alkyl/Arylhalogenid | Zeit [h] | Temp. [°C] | Produkt der Umsetzung mit Zink | Ausbeute [%] |
|---|---|---|---|---|
| **primär** | | | | |
| 1-Brom-6-chlorhexan | 4 | 25 | Hexyl-6-chlorzinkbromid | 100 |
| **sekundär** | | | | |
| cyclo-Hexylbromid | 2 | 65 | cyclo-Hexylzinkbromid | 99 |
| sek-Butylbromid | 2,5 | 65 | sek-Butylzinkbromid | 95 |
| **tertiär** | | | | |
| tert-Butylbromid | 1 | 25 | tert-Butylzinkbromid | 75 |
| **Arylhalogenide** | | | | |
| p-Brombenzonitril | 3 | 65 | 1-Bromozink-4-benzonitril | 90 |
| p-Brombenzoesäureethylester | 2 | 65 | 1-Bromozink-4-benzoesäureethylester | 100 |

Die erfindungsgemäße Zinkform wird erfindungsgemäß wie folgt erhalten:

Variante 1:

In einer erfindungsgemäßen Ausführungsform zur Herstellung der erfindungsgemäßen Zinkform, der Variante 1, werden technisches Zinkmetall und eine oder mehrere der genannten Verbindungen gemischt. In dieser Herstellmischung bildet sich die erfindungsgemäße Zinkform, die das hochreaktive Zinkmetall enthält.

Der Herstellmischung wird bevorzugt zusätzlich ein aprotisches organisches Lösungsmittel oder Lösemittelgemisch zugesetzt, wodurch eine Suspension erhalten wird. Bevorzugt wird das Lösemittel oder Lösemittelgemisch zugesetzt, in dem die Umsetzung der erfindungsgemäßen Zinkform erfolgen soll.

Erfindungsgemäß bevorzugt werden die Herstellmischung bzw. -suspension bei Temperaturen zwischen -20°C und 200°C, bevorzugt zwischen 15°C und 150°C so lange gerührt, bis die Aktivierung erfolgt. Bevorzugt wird zwischen einer Minute und 5 Stunden gerührt und/oder gemahlen.

Alkalialkoholate und Erdalkalialkoholate der Kationen Lithium, Natrium, Kalium und Magnesium mit den Anionen MeO, EtO, n-PrO, iso-PrO, n-BuO, sec-BuO, iso-BuO, tert-BuO, Amylat (AmO) sowie Alkaliamide und Erdalkaliamide der Kationen Lithium, Natrium, Kalium und Magnesium mit den Anionen $N(SiMe_3)_2$, $NMe_2$, $NEt_2$, $N(i\text{-}Pr)_2$, $N(n\text{-}Pr)_2$, $NH_2$ werden dabei verwendet.

Besonders bevorzugt sind Li(t-BuO), Na(t-BuO), K(t-BuO), Li(OAm), Na(OAm), K(OAm), Li(i-PrO), Na(i-PrO), K(i-PrO).

Die erfindungsgemäße Zinkform, isoliert oder in der Herstellmischung bzw. -suspension, kann direkt zur Herstellung metallorganischer Verbindungen eingesetzt werden.

Variante 2:

In einer weiteren erfindungsgemäßen Ausführungsform zur Herstellung des erfindungsgemäßen Zinkform, der Variante 2, werden der Herstellmischung bzw. -suspension nach Variante 1 zusätzlich ein oder mehrere Übergangsmetalle und/oder eine oder mehrere Übergangsmetallverbindungen zugesetzt. In dieser Herstellmischung bzw. -suspension bildet sich die erfindungsgemäße Zinkform, die das hochreaktive Zinkmetall enthält.

Der Herstellmischung wird ein aprotisches organisches Lösungsmittel oder Lösemittelgemisch zugesetzt, wodurch eine Suspension erhalten wird. Bevorzugt wird das Lösemittel oder Lösemittelgemisch zugesetzt, in dem die Umsetzung der erfindungsgemäßen Zinkform erfolgen soll.

Erfindungsgemäß bevorzugt werden die Herstellmischung bzw. -suspension bei Temperaturen zwischen -20°C und 200°C, bevorzugt zwischen 15°C und 150°C so lange gerührt, bis die Aktivierung erfolgt. Bevorzugt wird zwischen einer Minute und 5 Stunden gerührt und/oder gemahlen.

Erfindungsgemäß bevorzugt wird ein Übergangsmetall oder eine Übergangsmetallverbindung zugesetzt, besonders bevorzugt wird der Herstellmischung bzw. -suspension eine Übergangsmetallverbindungen zugesetzt.

Als Übergangsmetalle erfindungsgemäß bevorzugt sind Eisen, Cobalt, Nickel, Kupfer.

Als Übergangsmetallverbindungen erfindungsgemäß bevorzugt sind Verbindungen, deren Kationen im jeweiligen Reaktionsmedium durch Zink reduziert werden können, wobei besonders bevorzugt Übergangsmetallsalze, salzartige Verbindungen oder Metallkomplexe mit geeigneten Liganden sind.

Als Liganden können erfindungsgemäß unabhängig voneinander Amine, Amide, Alkohole, Alkoholate, Ether, Phosphane, Thiole, CO, Nitrile oder organische Verbindungen, beispielsweise Butadien, verwendet werden.

Besonders bevorzugt sind Übergangsmetallverbindungen der Elemente Eisen, Cobalt, Nickel und Kupfer.

Ganz besonders bevorzugt sind Eisenhalogenide, Cobalthalogenide, Nickelhalogenide und/oder Kupferhalogenide, insbesondere Eisen(II)chlorid, Eisen(III)chlorid, Eisen(II)bromid, Eisen(III) bromid, Eisen(II)iodid, Eisen(III)iodid, Kupfer(I)chlorid, Kupfer(II)chlorid, Kupfer(I)bromid, Kupfer(II)bromid, Kupfer(I)iodid, Kupfer(II)iodid, oder Mischungen aus diesen Salzklassen oder Salzen.

Die erfindungsgemäße Zinkform, isoliert oder in der Herstellmischung bzw. -suspension, kann direkt zur Herstellung metallorganischer Verbindungen eingesetzt werden.

Variante 3:

In einer weiteren, bevorzugten erfindungsgemäßen Ausführungsform zur Herstellung der erfindungsgemäßen Zinkform, der Variante 3, werden der Herstellmischung bzw. -suspension nach Variante 1 oder 2 eine oder mehrere Verbindungen der Formel AZnB zugesetzt. Bevorzugt werden Verbindungen der Formel AZnB in einem aprotischen organischen Lösemittel oder Lösemittelgemisch gelöst zugesetzt, besonders bevorzugt in dem Lösemittel oder Lösemittelgemisch, in dem eine Umsetzung des hochreaktiven Zinks erfolgen soll. In dieser Herstellmischung bzw. - suspension bildet sich die erfindungsgemäße Zinkform, die das hochreaktive Zinkmetall enthält.

Der Herstellmischung wird bevorzugt zusätzlich ein aprotisches organisches Lösungsmittel oder Lösemittelgemisch zugesetzt, wodurch eine Suspension erhalten wird. Bevorzugt wird das Lösemittel oder Lösemittelgemisch zugesetzt, in dem die Umsetzung der erfindungsgemäßen Zinkform erfolgen soll.

Erfindungsgemäß bevorzugt werden die Herstellmischung bzw. -suspension bei Temperaturen zwischen -20°C und 200°C, bevorzugt zwischen 15°C und 150°C so lange gerührt, bis die Aktivierung erfolgt. Bevorzugt wird zwischen einer Minute und 5 Stunden gerührt und/oder gemahlen.

Für Verbindungen der allgemeinen Zusammensetzung AZnB gilt:

- A und B sind unabhängig voneinander gewählt sind aus H, Halogen, OR, $OSiR_3$, $NR_2$, $N(SiR_3)_2$, $CO_3$, CN, Acetat und R, bevorzugt aus Halogen, OR, $NR_2$ und R;
  - wobei R für alle Fälle unabhängig voneinander aus gesättigten, ungesättigten, verzweigten, unverzweigten, funktionalisierten, unfunktionalisierten, aliphatischen, cyclischen, heterozyklischen oder aromatischen organischen Fragmenten ausgewählt ist;
  - wobei bevorzugt sind gesättigte, ungesättigte, verzweigte, unverzweigte, funktionalisierte, unfunktionalisierte, aliphatische, cyclische, heterozyklische oder aromatische organischen Fragmente mit 1 bis 40, besonders bevorzugt mit 1 bis 10 Kohlenstoffatomen;
  - wobei das organische Fragment bevorzugt dasjenige ist, das sich nach Umsetzungen von Zink mit organischen Halogeniden zu Organozinkhalogeniden in der zinkorganischen Verbindung wieder findet.

Erfindungsgemäß bevorzugt wird die Herstellmischung bzw. -suspension bei Temperaturen zwischen -20°C und 200°C, bevorzugt zwischen 15°C und 150°C so lange gerührt, bis die Aktivierung erfolgt. Bevorzugt wird zwischen einer Minute und 5 Stunden gerührt und/oder gemahlen.

Die erfindungsgemäße Zinkform, isoliert oder in der Herstellmischung bzw. -suspension, kann direkt zur Herstellung metallorganischer Verbindungen eingesetzt werden.

Variante 4:

In einer weiteren erfindungsgemäßen Ausführungsform zur Herstellung der erfindungsgemäßen Zinkform, der Variante 4, wird der Herstellmischung bzw. -suspension nach Variante 1, 2, oder 3 zur zusätzlichen Aktivierung der erfindungsgemäßen Zinkform ein weiteres Reagenz oder Reagenziengemisch zugesetzt. Die Herstellmischung bzw. -suspension wird zwischen einer Minute und 5 Stunden zwischen -78°C und dem Siedepunkt der Herstellmischung bzw. -suspension, bevorzugt zwischen 0°C und 50°C gerührt und/oder gemahlen. In dieser Herstellmischung bzw. -suspension bildet sich die erfindungsgemäße Zinkform, die das hochreaktive Zinkmetall enthält.

Dieses zusätzliche Reagenz oder Reagenziengemisch ist bevorzugt ausgewählt aus 1,2-Dibromethan, Iod, organischen und/oder anorganischen Säuren, organischen und/oder anorganischen Halogensilanen oder Mischungen aus diesen Reagenzien.

Die erfindungsgemäße Zinkform, isoliert oder in der Herstellmischung bzw. -suspension, kann direkt zur Herstellung metallorganischer Verbindungen eingesetzt werden.

Variante 5:

In einer weiteren erfindungsgemäßen Ausführungsform zur Herstellung der erfindungsgemäßen Zinkform, der Variante 5, wird als Vorbehandlung einer Suspension aus technischem Zinkmetall in einem aprotischen, organischen Lösemittel oder Lösemittelgemisch ein Reagenz oder Reagenziengemisch zugesetzt und zwischen einer Minute und 5 Stunden zwischen -78°C und dem Siedepunkt der Suspension, bevorzugt zwischen 0°C und 50°C gerührt

Dieses Reagenz oder Reagenziengemisch ist bevorzugt ausgewählt aus 1,2-Dibromethan, Iod, organischen und/oder anorganischen Säuren, organischen und/oder anorganischen Halogensilanen oder Mischungen aus diesen Reagenzien.

Nach dieser Vorbehandlung des Zinkmetalls wird die erfindungsgemäße Zinkform gemäß Varianten 1, 2, 3 oder 4 hergestellt. In dieser Herstellmischung bzw. -suspension bildet sich die erfindungsgemäße Zinkform, die das hochreaktive Zinkmetall enthält.

Die erfindungsgemäße Zinkform, isoliert oder in der Herstellmischung bzw. -suspension, kann direkt zur Herstellung metallorganischer Verbindungen eingesetzt werden.

Für die Varianten 1 bis 5 gilt, dass das molare Verhältnis von eingesetztem technischen Zink und der genannten Verbindungen bevorzugt 1 : 1 bis 1 : 0,0001, besonders bevorzugt 1 : 0,1 bis 1 : 0,0001 beträgt.

Für die Varianten 2 bis 5 gilt, dass das molare Verhältnis von eingesetztem technischen Zink und Übergangsmetallen oder Übergangsmetallverbindungen bevorzugt 1 : 0,5 bis 1 : 0,0001, besonders bevorzugt 1 : 0,1 bis 1 : 0,0001 beträgt.

Für die Varianten 3 bis 5 gilt, dass das molare Verhältnis von eingesetztem technischen Zink und Komponenten gemäß AZnB bevorzugt 1 : 10 bis 1 : 0,0001, besonders bevorzugt 1 : 1 bis 1 : 0,0001 beträgt.

Für die Varianten 4 und 5 sind als zusätzliches Reagenz oder Reagenziengemisch bevorzugt:

- als organische Säure Essigsäure oder Trifluoressigsäure oder Mischungen aus diesen;
- als anorganische Säure Salzsäure;
- als anorganisches Halogensilan Tetrachlorosilan;
- als organisches Halogensilan Trimethylchlorosilan, Dimethyldichlorosilan oder Methyltrichlorosilan oder Mischungen aus diesen.

Bei den Varianten 4 und 5 werden bezogen auf die Zinkmenge insgesamt 0,1 bis 20 mol%, bevorzugt 1 bis 10 mol%, besonders bevorzugt 1 bis 5 mol% Reagenz oder Reagenziengemisch eingesetzt.

Zusätzlich zu den Stoffen, die in den Mischungen nach den Varianten 1 bis 5 erfindungsgemäß zugegeben werden, können der Herstellmischung bzw. -suspension ein oder mehrere weitere Reagenzien und/oder Hilfsstoffe zugesetzt werden. Beispielsweise kann die Reaktivität der nach den Varianten 1 bis 5 erhaltenen erfindungsgemäßen Zinkform durch zusätzliche Anwendung gängiger Verfahren zur Metallaktivierung noch weiter erhöht werden.

Bei allen oben beschrieben Varianten wird die Herstellmischung bzw. -suspension bevorzugt unter Ausschluss von Luft und Feuchtigkeit gerührt und/oder gemahlen. Zusätzlich kann eine Ultraschallbehandlung der erfindungsgemäßen Reaktionsmischungen erfolgen.

Für alle oben beschrieben Varianten sind als aprotische, organische Lösungsmittel bevorzugt aliphatische oder aromatische Kohlenwasserstoffe, Heterozyklen, Ether, Amine, Nitrile, Amide oder Mischungen daraus.

Unter den Begriff aliphatische Kohlenwasserstoffe fallen cyclische, gesättigte, ungesättigte, verzweigte und unverzweigte Kohlenwasserstoffe. Unter den Begriff Ether fallen cyclische, gesättigte, ungesättigte, verzweigte, unverzweigte, gleichartig substituierte und unterschiedlich substituierte Ether mit mindestens einem Sauerstoffatom, vorzugsweise mit einem bis vier Sauerstoffatomen. Unter den Begriff Amine und Amide fallen cyclische, aliphatische, gesättigte, ungesättigte, verzweigte, unverzweigte, gleichartig substituierte und unterschiedlich substituierte Amine und Amide mit mindestens einem Stickstoffatom, vorzugsweise mit einem bis vier Stickstoffatomen. Unter den Begriff aromatische Kohlenwasserstoffe fallen unsubstituierte, einfach substituierte und mehrfach substituierte aromatische Verbindungen. Unter den Begriff Heterozyklen fallen substituierte, unsubstituierte, aromatische, gesättigte und ungesättigte cyclische Verbindung, die im Zyklus aus mindestens vier Kohlenstoffatomen und mindestens einem Atom aus der Gruppe der Heteroatome Sauerstoff, Schwefel und Stickstoff bestehen, bevorzugt sind vier bis sechs Kohlenstoffatome und eins bis drei Heteroatome.

Bevorzugte Lösungsmittel sind: Hexan, Heptan, Methylcylcohexan, Cycloheptan, Methylcycloheptan sowie deren Isomere; Benzol, Toluol, Cumol, Ethylbenzol, Xylole sowie deren Isomere; Pyridin; Dimethylether, Diethylether, Methyl-tert.-Butylether, Din-Butylether, THF, 2-Methyl-THF, Cyclopentylmethylether; Dimethoxyethan, Diethoxymethan, Diethoxyethan, Polyethylenglykol.

Für alle oben beschrieben Varianten gilt, dass die erfindungsgemäße Zinkform durch geeignete Verfahren von den anderen Komponenten der Herstellmischung bzw. Suspension abgetrennt werden kann. Geeignete Verfahren sind solche, welche einen oder mehrere Verfahrensschritte ausgewählt aus Siebung, Filtration, Dekantation, Zentrifugation, Destillation bei Normaldruck, Destillation bei vermindertem Druck, Trocknung oder Totaleindampfung enthalten. Andere gängige Verfahren zur Isolierung von Feststoffen können ebenfalls zur Anwendung kommen. Die abgetrennte erfindungsgemäße Zinkform kann ebenfalls direkt zur Herstellung metallorganischer Verbindungen eingesetzt werden.

Für alle oben beschrieben Varianten gilt, dass die erfindungsgemäße Zinkform gelagert werden kann. Bevorzugt erfolgt die Lagerung zwischen -100°C und 200°C, besonders bevorzugt im Bereich zwischen 0°C und 50°C. Bevorzugt erfolgt die Lagerung unter Ausschluss von Luft und Feuchtigkeit, besonders bevorzugt im Vakuum oder in einer Inertgasatmosphäre, beispielsweise in einer Stickstoff- oder Argonatmosphäre. Bevorzugt wird der Zutritt von Luft oder protischen Verbindungen wie beispielsweise Wasser vermieden. Die das hochreaktive Zinkmetall enthaltende Herstellmischung bzw. -suspension kann auch nach der Lagerung direkt zur Herstellung metallorganischer Verbindungen eingesetzt werden.

Die Erfindung wird durch die nachfolgenden Beispiele näher erläutert, ohne sie darauf einzuschränken.

Die nachstehend beschriebenen Versuche wurden unter Ausschluss von Luft und Feuchtigkeit in Argonatmosphäre durchgeführt. Es wurden technische Lösungsmittel und Substrate verwendet.

Beispiel 1: Herstellung der erfindungsgemäßen Zinkform gemäß Variante 1

10,0 g handelsüblicher Zinkgrieß (< 125μm) und 1 mol% Natrium-tert-butoxid werden in einen Reaktor eingewogen. Nach Zugabe von 10 g eines Lösungsmittels gemäß Tabelle 3 wird die erhaltene Suspension eine Stunde am Siedepunkt gerührt (alternativ kann zehn Stunden bei 20°C gerührt werden).

Beispiel 2: Herstellung der erfindungsgemäßen Zinkform gemäß Variante 2 und Übergangsmetallverbindungen

a) 10,0 g handelsüblicher Zinkgrieß (< 125μm), 1 mol% Natrium-tert-butoxid und 1 mol% Kupfer(I)iodid werden in einen Reaktor eingewogen. Nach Zugabe von 10 g Lösungsmittel gemäß Tabelle 3 wird die erhaltene Suspension eine Stunde am Siedepunkt gerührt (alternativ kann zehn Stunden bei 20°C gerührt werden).

b) 10,0 g handelsübliches Zinkpulver, 0,5 mol% Magnesiumethoxid und 0,5 mol% Eisen(III)chlorid werden in einen Reaktor eingewogen. Nach Zugabe von 10 g Lösungsmittel gemäß Tabelle 3 wird die erhaltene Suspension eine Stunde am Siedepunkt gerührt (alternativ kann zehn Stunden bei 20°C gerührt werden).

c) 10,0 g handelsüblicher Zinkgrieß (< 325μm), 1 mol% Lithiumbistrimethylsilylamid und 0,5 mol% Nickel(II)iodid werden in einen Reaktor eingewogen. Nach Zugabe von 10 g Lösungsmittel gemäß Tabelle 3 wird die erhaltene Suspension eine Stunde am Siedepunkt gerührt (alternativ kann zehn Stunden bei 20°C gerührt werden).

Beispiel 3: Isolierung der erfindungsgemäßen Zinkform

Die nach Beispiel 2a hergestellte erfindungsgemäße Zinkform wird durch Filtration abgetrennt, am Vakuum getrocknet und unter Inertgasatmosphäre aufbewahrt.

Vergleichsbeispiele:

Beispiel 4: Aktivierung von Zinkmetall mit 1,2-Dibromethan und Trimethylsilylchlorid

10,0 g handelsüblicher Zinkgrieß (< 325 μm) werden in ca. 10 g THF suspendiert. Zu dieser Suspension werden 5 mol% 1,2-Dibromethan gegeben und die Suspension ca. 30 Minuten am Rückfluss erhitzt. Nach Abkühlen auf Raumtemperatur werden 2 mol% Trimethylsilylchlorid zugegeben und die Reaktionsmischung nochmals für ca. 30 Minuten am Rückfluss erhitzt.

Beispiel 5: Aktivierung von Zinkmetall mit Übergangsmetallverbindungen

10,0 g handelsüblicher Zinkgrieß (< 125 μm) und 1 mol% Kupfer(I)iodid werden in einen Reaktor eingewogen. Nach Zugabe von 10 g Lösungsmittel gemäß Tabelle 3 wird die erhaltene Suspension eine Stunde am Siedepunkt gerührt.

Beispiel 6: Aktivierung von Zinkmetall mit Verbindungen gemäß AZnB und Übergangsmetallverbindungen (jedoch ohne Verbindungen gemäß Hauptanspruch 1).

10,0 g handelsübliches Zinkpulver, 1 mol% Kupfer(I)iodid und 10 mol% einer Lösung von n-Butylzinkbromid in einem Lösungsmittel gemäß Tabelle 3 werden in einen Reaktor eingewogen. Die erhaltene Suspension wird eine Stunde am Siedepunkt gerührt.

Umsetzungen mit n-Butylbromid:

Beispiel 7:

Zu 1,2 Äquivalenten der erfindungsgemäßen Zinkform, hergestellt gemäß Beispiel 1, werden 1,0 Äquivalente n-Butylbromid zugegeben und die Reaktionsmischung bei der in der Tabelle angegebenen Temperatur gerührt. Nach der in Tabelle 3 angegebenen Reaktionszeit wird der Umsatz GC-analytisch bestimmt.

Beispiele 8 bis 10:

Zu 1,2 Äquivalenten der erfindungsgemäßen Zinkform, hergestellt gemäß den Beispielen 2a bis 2c, werden 1,0 Äquivalente n-Butylbromid zugegeben und die Reaktionsmischung bei der in der Tabelle angegebenen Temperatur gerührt. Nach der in Tabelle 3 angegebenen Reaktionszeit wird der Umsatz GC-analytisch bestimmt.

Beispiele 11 bis 13: Zusätzliche Verwendung von Verbindungen gemäß Formel AZnB

Zu 1,2 Äquivalenten der erfindungsgemäßen Zinkform, hergestellt gemäß den Beispielen 2a bis 2c, werden ca. 10 mol% einer Lösung von n-Butylzinkbromid in einem Lösungsmittel gemäß Tabelle 3 gefolgt von 1,0 Äquivalenten n-Butylbromid zugegeben und die Reaktionsmischung bei der in der Tabelle angegebenen Temperatur gerührt. Nach der in Tabelle 3 angegebenen Reaktionszeit wird der Umsatz GC-analytisch bestimmt.

Beispiel 14:

Zu 1,2 Äquivalenten der erfindungsgemäßen Zinkform, hergestellt gemäß Beispiel 3, in 10 g Lösungsmittel gemäß Tabelle 3 werden ca. 10 mol% einer Lösung von n-Butylzinkbromid in einem Lösungsmittel gemäß Tabelle 3 gefolgt von 1,0 Äquivalenten n-Butylbromid gegeben und die Reaktionsmischung bei der in der Tabelle angegebenen Temperatur gerührt. Nach der in Tabelle 3 angegebenen Reaktionszeit wird der Umsatz GC-analytisch bestimmt.

Beispiele 15 bis 17 (Vergleichsbeispiele (Vgl.)):

Zu 1,2 Äquivalenten Zinkmetall, behandelt gemäß den Beispielen 4 bis 6, werden 1,0 Äquivalente n-Butylbromid zugegeben und der Ansatz bei der in der Tabelle angegebenen Temperatur gerührt. Nach der in Tabelle 3 angegebenen Reaktionszeit wird der Umsatz GC-analytisch bestimmt.

Die Ergebnisse der Umsetzungen der Beispiele 7 bis 17 sind der folgenden Tabelle zu entnehmen. Sowohl der Umsatz, als auch die Identität des Produktes wurden nach Derivatisierung eines Reaktionsaliquotes mit Iod und Natriumthiosulfatlösung gemäß

$$n\text{-BuZnBr} \xrightarrow[\text{2. } Na_2S_2O_3]{\text{1. } I_2 \text{ / Ether}} n\text{-BuI} + \text{"ZnBrI"}$$

über GC/MS-analytische Methoden verifiziert.

Tabelle 3: Ergebnisse der Umsetzungen mit n-Butylbromid

| Beispiel | Metallaktivierung gemäß Beispiel | Temperatur [°C] | Lösungsmittel | Reaktionszeit [h] | Umsatz [%] |
|---|---|---|---|---|---|
| 7 | 1 | 80 | Methylcyclohexan | 4,5 | 59 |
| 8 | 2a | 80 | Methylcyclohexan | 5,0 | 95 |
| 9 | 2b | 80 | Toluol | 5,5 | 97 |
| 10 | 2c | 60 | THF | 4,5 | 98 |

(fortgesetzt)

| Beispiel | Metallaktivierung gemäß Beispiel | Temperatur [°C] | Lösungsmittel | Reaktionszeit [h] | Umsatz [%] |
|---|---|---|---|---|---|
| 11 | 2a | 80 | Methylcyclohexan | 3,0 | 100* |
| 12 | 2b | 80 | Toluol | 4,0 | 93 |
| 13 | 2c | 60 | THF | 3,0 | 96 |
| 14 | 3 | 80 | Methylcyclohexan | 3,0 | 100* |
| 15 (Vgl.) | 4 | 65 | THF | 20,0 | 15 |
| 16 (Vgl.) | 5 | 80 | Methylcyclohexan | 6,5 | 10 |
| 17 (Vgl.) | 6 | 80 | Methylcyclohexan | 4,0 | 62 |

*100 % bedeutet, dass nur Produkt gefunden wird und n-Butylbromid nicht mehr nachweisbar ist.

Nachfolgend sind weitere erfindungsgemäße Beispiele aufgeführt:

Beispiel 18: Herstellung von n-Butylzinkbromid, isolierte Ausbeute und Zusammensetzung der Produktlösung

a) Herstellung der erfindungsgemäßen Zinkform:

30,12 g (460,69 mmol) handelsübliches Zink, 0,44 g (4,58 mmol) Natrium-tert-butoxid und 0,89 g (4,67 mmol) Cu(I)I werden in 9,15 g Methylcyclohexan (unkonditioniert) suspendiert und ca. 2 Stunden bei 70°C gerührt. Nach Absetzen des Zinkmetalls wird die überstehende braune Lösung abgehebert, das Metall zweimal mit je 10 g Methylcyclohexan gewaschen und am Vakuum getrocknet.

b) Herstellung von n-Butylzinkbromid:

10,85 g (165,95 mmol) der zuvor in 18a dargestellten erfindungsgemäßen Zinkform werden in einem 250-ml-Schlenkkolben mit Rückflusskühler und Innentemperaturmessfühler in ca. 15 g Methylcyclohexan suspendiert. Über einen Tropftrichter werden ca. 50 % der Gesamtmenge von zuvor gemäß den Beispielen 12 und/oder 15 hergestellter n-BuZnBr-Lösung (Gesamtmenge: 4,95 g, 17,5 mmol; 71 Gew.-% in Toluol) zugegeben. Die restlichen 50 % n-BuZnBr werden im Tropftrichter mit 19,39 g (141,5 mmol) n-BuBr gemischt und die klare Lösung zur Reaktionsmischung gegeben. Anschließend wird die Suspension mittels Heizpilz innerhalb von 90 Minuten auf 100°C erhitzt und 30 Minuten bei 100°C gehalten. Nach Abkühlen auf Raumtemperatur werden ca. 20 g Methylcyclohexan zugegeben und über eine D3-Fritte klar filtriert. Die Zusammensetzung der Produktlösung wird nassanalytisch untersucht. Folgende Werte werden gefunden. Die isolierte Ausbeute bezogen auf eingesetztes n-BuBr beträgt 98 %.

Tabelle 4: Analysenwerte

| $OH^-$ | $Br^-$ | $Zn^{2+}$ | Konz. | Ausbeute |
|---|---|---|---|---|
| mmol/g | | | Gew.-% | % |
| 2,33 | 2,33 | 2,34 | 47,2 | 98[1] |

[1]zugegebene n-BuZnBr-Menge berücksichtigt, Waschlösung berücksichtigt.

Beispiel 19: Umsetzung mit iso-Propylbromid

10,10 g (154,5 mmol) hochreaktives Zinkmetall, hergestellt gemäß Beispiel 18a, werden in ca. 10 g Methylcyclohexan suspendiert. Anschließend werden 15,9 g (129,4 mmol) iso-Propylbromid in ca. 14 g Methylcyclohexan zugegeben und die Mischung drei Stunden bei 60°C bis 70°C gerührt. Anschließend wird klar filtriert und eine Probe analysiert. Der Rückstand wird mit THF gewaschen und das Waschfiltrat separat analysiert. Die Identität des Produktes wurde über GC/MS bestätigt, es konnte kein iso-PrBr mehr nachgewiesen werden. Die isolierte Ausbeute (mit Waschfiltrat) beträgt 84,1 % bezogen auf eingesetztes iso-PrBr.

Tabelle 5: Analysenwerte

| Probe | $OH^-$ | $Br^-$ | $Zn^{2+}$ | Konz. | Ausbeute |
|---|---|---|---|---|---|
| | mmol/g | | | Gew.-% | % |
| Urlösung | 2,36 | 2,35 | 2,35 | 44,5 | 80,2 |
| Waschlösung | 0,31 | 0,31 | 0,32 | 5,8 | 3,9 |

Beispiel 20: Herstellung von 4-Bromozinkbutansäureethylester

34,28 g (525 mmol) technisches Zinkmetall, 2,04 g (10,7 mmol) Cu(I)I und 1,10 g (11,4 mmol) Natrium-tert-butoxid werden in 21,85 g Toluol suspendiert und bei 100°C eine Stunde gerührt. Nach Abkühlung auf 40°C werden 65,7 g THF und 3,03 g (27,9 mmol) Trimethylchlorsilan zugegeben. Nach 20 Minuten Rühren wird die Reaktionssuspension auf 60°C erhitzt und 48,2 g (247,1 mmol) 4-Brombutansäureethylester werden innerhalb von drei Stunden dosiert. Nach erfolgter Dosierung wird eine Probe entnommen und nassanalytisch untersucht; das Ergebnis ist in Tabelle 6 dargestellt. Anschließend wird noch 3 Stunden bei 60°C gerührt. Nach Abkühlung auf Raumtemperatur wird die Suspension klar filtriert und analysiert. Der Rückstand wird mit THF gewaschen. Ein Aliquot der Produktlösung wird nach Hydrolyse mit Wasser GC/MS-analytisch untersucht. Die Identität des Produktes wird bestätigt. Die Ausbeute beträgt 94,9 %.

Tabelle 6: Analysenwerte zu Beispiel 20:

| Probe | $OH^-$ | $Br^-$ | $Zn^{2+}$ | Konz. | Ausbeute |
|---|---|---|---|---|---|
| | mmol/g | | | Gew.-% | % |
| nach Dosierende | 1,29 | 1,30 | 1,31 | | |
| nach Filtration | 1,58 | 1,62 | 1,61 | 41,1 | 88,6 |
| Waschlösung | 0,46 | 0,46 | 0,47 | | 6,3 |

Die Bestimmung der Gesamtbase erfolgte acidimetrisch, die Bestimmung des Bromid-Gehaltes über Argentometrie und die Bestimmung von $Zn^{2+}$ erfolgte komplexometrisch.

## Patentansprüche

1. Verfahren zur Herstellung einer Zinkform durch Umsetzung von technischem Zinkmetall mit einem Alkalialkoholat und/oder Erdalkalialkoholat der Kationen Lithium, Natrium, Kalium und Magnesium mit den Anionen MeO, EtO, n-PrO, iso-PrO, n-BuO, sec-BuO, iso-BuO, tert-BuO, Amylat (AmO) sowie Alkaliamide und Erdalkaliamide der Kationen Lithium, Natrium, Kalium und Magnesium mit den Anionen $N(SiMe_3)_2$, $NMe_2$, $NEt_2$, $N(i\text{-}Pr)_2$, $N(n\text{-}Pr)_2$, $NH_2$ oder Mischungen aus diesen Verbindungen, wobei der Herstellmischung ein aprotisches organisches Lösungsmittel oder Lösemittelgemisch zugesetzt wird.

2. Verfahren nach Anspruch 1, **dadurch gekennzeichnet, dass** Li(t-BuO), Na(t-BuO), K(t-BuO), Li(OAm), Na(OAm), K(OAm), Li(i-PrO), Na(i-PrO), K(i-PrO) oder Mischungen aus diesen Verbindungen eingesetzt werden.

3. Verfahren nach Anspruch 1 oder 2, **dadurch gekennzeichnet, dass** der Herstellmischung ein oder mehrere Übergangsmetalle und/oder eine oder mehrere Übergangsmetallverbindungen zugesetzt werden, wobei bevorzugt ein Übergangsmetall oder eine Übergangsmetallverbindung, besonders bevorzugt eine Übergangsmetallverbindungen zugesetzt wird.

4. Verfahren nach Anspuch 3, **dadurch gekennzeichnet, dass** die Übergangsmetalle aus Eisen, Cobalt, Nickel, Kupfer oder Mischungen aus diesen ausgewählt sind.

5. Verfahren nach Anspruch 3 oder 4, **dadurch gekennzeichnet, dass** es sich bei den Übergangsmetallverbindungen um Übergangsmetallsalze, salzartige Verbindungen oder Metallkomplexe mit geeigneten Liganden oder Mischungen aus diesen Verbindungen handelt, wobei die Liganden unabhängig voneinander ausgewählt sind aus Aminen, Amiden, Alkoholen, Alkoholaten, Ethern, Phosphanen, Thiolen, CO, Nitrilen oder organischen Verbindungen wie Butadien.

6. Verfahren nach mindestens einem der Ansprüche 3 bis 5, **dadurch gekennzeichnet, dass** es sich bei den Übergangsmetallverbindungen um Übergangsmetallverbindungen der Elemente Eisen, Cobalt, Nickel und Kupfer, bevorzugt um Eisenhalogenide, Cobalthalogenide, Nickelhalogenide und/oder Kupferhalogenide, besonders bevorzugt um Eisen(II)chlorid, Eisen(III)chlorid, Eisen(II)bromid, Eisen(III) bromid, Eisen(II)iodid, Eisen(III)iodid, Kupfer(I)chlorid, Kupfer(II)chlorid, Kupfer(I)bromid, Kupfer(II)bromid, Kupfer(I)iodid, Kupfer(II)iodid oder Mischungen aus diesen Übergangsmetallverbindungen bzw. -salzen handelt.

7. Verfahren nach mindestens einem der Ansprüche 1 bis 6, **dadurch gekennzeichnet, dass** der Herstellmischung eine oder mehrere Verbindungen der allgemeinen Formel AZnB zugesetzt werden, wobei gilt:

   - A und B sind unabhängig voneinander gewählt sind aus H, Halogen, OR, $OSiR_3$, $NR_2$, $N(SiR_3)_2$, $CO_3$, CN, Acetat und R, bevorzugt aus Halogen, OR, $NR_2$ und R;

      - wobei R für alle Fälle unabhängig voneinander aus gesättigten, ungesättigten, verzweigten, unverzweigten, funktionalisierten, unfunktionalisierten, aliphatischen, cyclischen, heterozyklischen oder aromatischen organischen Fragmenten ausgewählt ist;
      - wobei bevorzugt sind gesättigte, ungesättigte, verzweigte, unverzweigte, funktionalisierte, unfunktionalisierte, aliphatische, cyclische, heterozyklische oder aromatische organischen Fragmente mit 1 bis 40, besonders bevorzugt mit 1 bis 10 Kohlenstoffatomen;
      - wobei das organische Fragment bevorzugt dasjenige ist, das sich nach Umsetzungen von Zink mit organischen Halogeniden zu Organozinkhalogeniden in der zinkorganischen Verbindung wieder findet.

8. Verfahren nach mindestens einem der Ansprüche 1 bis 7, **dadurch gekennzeichnet, dass** die Herstellmischung bzw. -suspension gerührt und/oder gemahlen wird.

9. Verfahren nach mindestens einem der Ansprüche 1 bis 8, **dadurch gekennzeichnet, dass** die Herstellmischung bzw. -suspension bei Temperaturen zwischen -20°C und 200°C, bevorzugt zwischen 15°C und 150°C gerührt und/oder gemahlen wird.

10. Verfahren nach mindestens einem der Ansprüche 1 bis 9, **dadurch gekennzeichnet, dass** zur zusätzlichen Aktivierung der erfindungsgemäßen Zinkform der Herstellmischung bzw. -suspension ein weiteres Reagenz oder Reagenziengemisch zugesetzt wird, ausgewählt aus 1,2-Dibromethan, Iod, organischen und/oder anorganischen Säuren, organischen und/oder anorganischen Halogensilanen oder Mischungen aus diesen Reagenzien.

11. Verfahren nach Anspruch 10, **dadurch gekennzeichnet, dass** das Zinkmetall vor der Aktivierung vorbehandelt wird, wobei einer Suspension des Zinkmetalls in einem aprotischen, organischen Lösemittel oder Lösemittelgemisch ein Reagenz oder Reagenziengemisch zugesetzt wird, ausgewählt aus 1,2-Dibromethan, Iod, organischen und/oder anorganischen Säuren, organischen und/oder anorganischen Halogensilanen oder Mischungen aus diesen Reagenzien.

12. Verfahren nach Anspruch 11, **dadurch gekennzeichnet, dass** das Reagenz oder Reagenziengemisch ausgewählt ist aus folgenden Verbindungen oder deren Mischungen:

   - Essigsäure oder Trifluoressigsäure oder Mischungen aus diesen;
   - Salzsäure;
   - Tetrachlorosilan;
   - Trimethylchlorosilan, Dimethyldichlorosilan oder Methyltrichlorosilan oder Mischungen aus diesen.

13. Verfahren nach mindestens einem der Ansprüche 10 bis 12, **dadurch gekennzeichnet, dass** bezogen auf die Menge des eingesetzten Zinks insgesamt 0,5 bis 20 mol%, bevorzugt 1 bis 10 mol%, besonders bevorzugt 1 bis 5 mol% Reagenz oder Reagenziengemisch eingesetzt werden.

14. Verfahren nach mindestens einem der Ansprüche 1 bis 13, **dadurch gekennzeichnet, dass** als aprotische, organische Lösungsmittel aliphatische oder aromatische Kohlenwasserstoffe, Heterozyklen, Ether, Amine, Nitrile, Amide oder Mischungen daraus eingesetzt werden.

15. Verfahren nach mindestens einem der Ansprüche 1 bis 14, **dadurch gekennzeichnet, dass** die die erfindungsgemäße Zinkform enthaltende Herstellmischung bzw. -suspension unter Ausschluss von Luft und Feuchtigkeit, bevorzugt unter Inertgasatmosphäre gerührt und/oder gemahlen wird.

16. Verfahren nach mindestens einem der Ansprüche 1 bis 15, **dadurch gekennzeichnet, dass** die die erfindungsgemäße Zinkform enthaltende Herstellmischung bzw. -suspension mit Ultraschall behandelt wird.

17. Verfahren nach mindestens einem der Ansprüche 1 bis 16, **dadurch gekennzeichnet, dass** die die erfindungsgemäße Zinkform enthaltende Herstellmischung bzw. -suspension, bevorzugt unter Ausschluss von Luft und Feuchtigkeit, besonders bevorzugt unter Inertgasatmosphäre gelagert wird.

18. Verfahren nach mindestens einem der Ansprüche 1 bis 17, **dadurch gekennzeichnet, dass** die die erfindungsgemäße Zinkform enthaltende Herstellmischung bzw. -suspension direkt zur Herstellung metallorganischer Verbindungen eingesetzt wird.

19. Verfahren nach mindestens einem der Ansprüche 1 bis 18, **dadurch gekennzeichnet, dass** die erfindungsgemäße Zinkform von den anderen Komponenten der Herstellmischung bzw. Suspension abgetrennt wird.

20. Zinkform hergestellt nach mindestens einem der Ansprüche 1 bis 19, **dadurch gekennzeichnet, dass** das hochreaktive Zinkmetall eine Korngröße über 2 $\mu$m, bevorzugt eine Korngröße von 10 bis 500 $\mu$m, besonders bevorzugt von 50 bis 350 $\mu$m hat.

21. Zinkform nach Anspruch 20, **dadurch gekennzeichnet, dass** sie nicht durch Alkalihalogenide, -cyanide, -sulfate, -nitrate, -nitrite und/oder -acetate verunreinigt ist.

22. Zinkform nach Anspruch 20 oder 21, **dadurch gekennzeichnet, dass** sie in oxidativen Additionsreaktionen mit n-Butylbromid Ausbeuten von n-Butylzinkbromid größer 50 % innerhalb eines Zeitraumes von fünf Stunden bei Temperaturen unterhalb von 150°C liefert.

23. Zinkform nach mindestens einem der Ansprüche 20 bis 22, **dadurch gekennzeichnet, dass** sie in oxidativen Additionsreaktionen mit n-Butylbromid Ausbeuten von n-Butylzinkbromid größer oder gleich 60 %, bevorzugt größer oder gleich 90 % innerhalb eines Zeitraumes von 4,5 Stunden bei Temperaturen unterhalb von 150°C, bevorzugt unterhalb von 100°C, besonders bevorzugt bei Temperaturen von kleiner oder gleich 80°C liefert.

**Claims**

1. A method for producing a form of zinc by reacting technical-grade zinc metal with an alkali-metal alcoholate and/or alkaline-earth metal alcoholate of the cations lithium, sodium, potassium and magnesium with the anions MeO, EtO, n-PrO, iso-PrO, n-BuO, sec-BuO, iso-BuO, tert-BuO, amylate (AmO), and alkali-metal amides and alkaline-earth metal amides of the cations lithium, sodium, potassium and magnesium with the anions $N(SiMe_3)_2$, $NMe_2$, $NEt_2$, $N(i\text{-}Pr)_2$, $N(n\text{-}Pr)_2$ and $NH_2$, or mixtures of these compounds, wherein an aprotic organic solvent or solvent mixture is added to the preparative mixture.

2. The method according to claim 1, **characterized in that** Li(t-BuO), Na(t-BuO), K(t-BuO), Li(OAm), Na(OAm), K(OAm), Li(i-PrO), Na(i-PrO) and K(i-PrO), or mixtures of these compounds are used.

3. The method according to claim 1 or 2, **characterized in that** one or more transition metals and/or one or more transition-metal compounds are added to the preparative mixture, wherein preferably one transition metal or one transition-metal compound, particularly preferably one transition-metal compound, is added.

4. The method according to claim 3, **characterized in that** the transition metals are selected from iron, cobalt, nickel, copper, or mixtures thereof.

5. The method according to claim 3 or 4, **characterized in that** the transition-metal compounds are transition-metal salts, salt-like compounds or metal complexes with suitable ligands, or mixtures of these compounds, the ligands independently of one another being selected from amines, amides, alcohols, alcoholates, ethers, phosphines, thiols, CO, nitriles or organic compounds such as butadiene.

6. The method according to at least one of claims 3 to 5, **characterized in that** the transition-metal compounds are

transition-metal compounds of the elements iron, cobalt, nickel and copper, preferably iron halides, cobalt halides, nickel halides and/or copper halides, particularly preferably iron(II)chloride, iron(III)chloride, iron(II)bromide, iron(III)bromide, iron(II)iodide, iron(III)iodide, copper(I)chloride, copper(II)chloride, copper(I)bromide, copper(II)bromide, copper(I)iodide, copper(II)iodide, or mixtures of these transition-metal compounds or salts.

**7.** The method according to at least one of claims 1 to 6, **characterized in that** one or more compounds of the composition AZnB are added to the preparative mixture, wherein:

- A and B are independently selected from H, halogen, OR, $OSiR_3$, $NR_2$, $N(SiR_3)_2$, $CO_3$, CN, acetate, and R preferably from halogen, OR, $NR_2$ and R;
- wherein R is selected independently of one another from saturated, unsaturated, branched, unbranched, functionalized, non-functionalized, aliphatic, cyclic, heterocyclic or aromatic organic fragments;
- wherein saturated, unsaturated, branched, unbranched, functionalized, non-functionalized, aliphatic, cyclic, heterocyclic or aromatic organic fragments with 1 to 40 carbon atoms are preferred, particularly preferably with 1 to 10 carbon atoms;
- wherein the organic fragment preferably is the one that can be found in the organozinc compound obtained after reacting zinc with organic halides to form organozinc halides.

**8.** The method according to at least one of claims 1 to 7, **characterized in that** the preparative mixture or suspension is stirred or ground.

**9.** The method according to at least one of claims 1 to 8, **characterized in that** the preparative mixture or suspension is stirred or ground at temperatures between -20 °C and 200 °C, preferably between 15 °C and 150 °C.

**10.** The method according to at least one of claims 1 to 9, **characterized in that** for additional activation of the form of zinc according to the invention, an additional reagent or reagent mixture, selected from 1,2-dibromoethane, iodine, organic and/or inorganic acids, organic and/or inorganic halogenosilanes, or mixtures of these reagents, is added to the preparative mixture or suspension.

**11.** The method according to claim 10, **characterized in that** the zinc metal is pretreated prior to activation by adding a reagent or reagent mixture selected from 1,2-dibromoethane, iodine, organic and/or inorganic acids, organic and/or inorganic halogenosilanes or mixtures of these reagents to a suspension of the zinc metal in an aprotic organic solvent or solvent mixture.

**12.** The method according to claim 11, **characterized in that** the reagent or reagent mixture is selected from the following compounds or mixtures thereof:

- acetic acid or trifluoroacetic acid, or mixtures thereof;
- hydrochloric acid;
- tetrachlorosilane;
- trimethylchlorosilane, dimethyldichlorosilane or methyltrichlorosilane, or mixtures thereof.

**13.** The method according to at least one of claims 10 to 12, **characterized in that** a total of 0.5 to 20 mol %, preferably 1 to 10 mol %, particularly preferably 1 to 5 mol % of reagent or reagent mixture is used, based on the amount of zinc used.

**14.** The method according to at least one of claims 1 to 13, **characterized in that** aliphatic or aromatic hydrocarbons, heterocycles, ethers, amines, nitriles, amides or mixtures thereof are used as aprotic organic solvents.

**15.** The method according to at least one of claims 1 to 14, **characterized in that** the preparative mixture or suspension containing the form of zinc according to the invention is stirred or ground in the absence of air and moisture, preferably under inert gas atmosphere.

**16.** The method according to at least one of claims 1 to 15, **characterized in that** the preparative mixture or suspension containing the form of zinc according to the invention is treated with ultrasound.

**17.** The method according to at least one of claims 1 to 16, **characterized in that** the preparative mixture or suspension containing the form of zinc according to the invention is stored in the absence of air and moisture, particularly

preferably under inert gas atmosphere.

18. The method according to at least one of claims 1 to 17, **characterized in that** the preparative mixture or suspension containing the form of zinc according to the invention is used directly to prepare an organometallic compound.

19. The method according to at least one of claims 1 to 18, **characterized in that** the form of zinc according to the invention is separated from the other components of the preparative mixture or suspension.

20. A form of zinc prepared according to at least one of claims 1 to 19, **characterized in that** the highly reactive zinc metal has a particle size above 2 $\mu$m, preferably a particle size of 10 to 500 $\mu$m, particularly preferably from 50 to 350 $\mu$m.

21. The form of zinc according to claim 20, **characterized in that** said form of zinc is not contaminated with alkali-metal halides, cyanides, sulfates, nitrates, nitrites and/or acetates.

22. The form of zinc according to claim 20 or 21, **characterized in that** in oxidative addition reactions with n-butyl bromide, it produces yields of n-butylzinc bromide of over 50% within a period of five hours at temperatures below 150 °C.

23. The form of zinc according to at least one of claims 20 to 22, **characterized in that** in oxidative addition reactions with n-butyl bromide, it produces yields of n-butylzinc bromide greater than or equal to 60%, preferably greater than or equal to 90%, within a period of 4.5 hours at temperatures below 150 °C, preferably below 100 °C, particularly preferably at temperatures below or equal to 80 °C.

## Revendications

1. Procédé de production d'une forme de zinc par réaction de zinc métallique industriel avec un alcoolate alcalin et/ou alcalino-terreux des cations lithium, sodium, potassium et magnésium avec les anions MeO, EtO, n-PrO, iso-PrO, n-BuO, sec-BuO, iso-BuO, tert-BuO, amylate (AmO) ainsi que des amides alcalins et alcalino-terreux des cations lithium, sodium, potassium et magnésium avec les anions $N(SiMe_3)_2$, $NMe_2$, $NEt_2$, $N(i\text{-}Pr)_2$, $N(n\text{-}Pr)_2$, $NH_2$ ou des mélanges de ces composés, dans lequel un solvant ou un mélange de solvants organique aprotique est ajouté au mélange de production.

2. Procédé selon la revendication 1, **caractérisé en ce que** le Li(t-BuO), le Na(t-BuO), le K(t-BuO), le Li(OAm), le Na(OAm), le K(OAm), le Li(i-PrO), le Na(i-PrO), le K(i-PrO) ou des mélanges de ces composés sont utilisés.

3. Procédé selon la revendication 1 ou 2, **caractérisé en ce qu'**un ou plusieurs métaux de transition et/ou un ou plusieurs composés de métaux de transition sont ajoutés au mélange de production, dans lequel de préférence un métal de transition ou un composé de métal de transition, de manière particulièrement préférée des composés de métal de transition, sont ajoutés.

4. Procédé selon la revendication 3, **caractérisé en ce que** les métaux de transition sont choisis parmi le fer, le cobalt, le nickel, le cuivre et des mélanges de ceux-ci.

5. Procédé selon la revendication 3 ou 4, **caractérisé en ce que** les composés de métal de transition sont des sels de métal de transition, des composés de type sel ou des complexes de métal avec des ligands appropriés ou des mélanges de ces composés, dans lequel les ligands sont choisis indépendamment parmi les amines, les amides, les alcools, les alcoolates, les éthers, les phosphanes, les thiols, les CO, les nitriles ou des composés organiques tels que le butadiène.

6. Procédé selon au moins l'une des revendications 3 à 5, **caractérisé en ce que** les composés de métal de transition sont des composés de métal de transition des éléments fer, cobalt, nickel et cuivre, de préférence des halogénures de fer, des halogénures de cobalt, des halogénures de nickel et/ou des halogénures de cuivre, de manière particulièrement préférée le chlorure de fer (II), le chlorure de fer (III), le bromure de fer (II), le bromure de fer (III), l'iodure de fer (II), l'iodure de fer (III), le chlorure de cuivre (I), le chlorure de cuivre (II), le bromure de cuivre (I), le bromure de cuivre (II), l'iodure de cuivre (I), l'iodure de cuivre (II) ou des mélanges de ces composés ou sels de métal de transition.

**7.** Procédé selon au moins l'une des revendications 1 à 6, **caractérisé en ce qu'**un ou plusieurs composés de formule générale AZnB sont ajoutés au mélange de production, dans laquelle :

- A et B sont indépendamment choisis parmi H, l'halogène, OR, $OSiR_3$, $NR_2$, $N(SiR_3)_2$, $CO_3$, CN, l'acétate et R, de préférence l'halogène, OR, $NR_2$ et R ;
- dans laquelle R est indépendamment choisi, pour chaque cas, parmi des fragments organiques saturés, insaturés, ramifiés, non ramifiés, fonctionnalisés, non fonctionnalisés, aliphatiques, cycliques, hétérocycliques ou aromatiques ;
- dans laquelle les fragments organiques saturés, insaturés, ramifiés, non ramifiés, fonctionnalisés, non fonctionnalisés, aliphatiques, cycliques, hétérocycliques ou aromatiques ayant de 1 à 40, de manière particulièrement préférée de 1 à 10 atomes de carbone, sont préférés ;
- dans laquelle le fragment organique est de préférence celui qu'on retrouve après des réactions du zinc avec des halogénures organiques pour former des halogénures organozinciques, dans le composé organozincique.

**8.** Procédé selon au moins l'une des revendications 1 à 7, **caractérisé en ce que** le mélange ou la suspension de production est agité(e) et/ou broyé(e).

**9.** Procédé selon au moins l'une des revendications 1 à 8, **caractérisé en ce que** le mélange ou la suspension de production est agité(e) et/ou broyé(e) à des températures comprises entre -20 °C et 200 °C, de préférence entre 15 °C et 150 °C.

**10.** Procédé selon au moins l'une des revendications 1 à 9, **caractérisé en ce que**, pour l'activation supplémentaire de la forme de zinc selon l'invention, un autre réactif ou mélange de réactifs choisi parmi le 1,2-dibromoéthane, l'iode, les acides organiques et/ou inorganiques, les halogénosilanes organiques et/ou inorganiques ou des mélanges de ces réactifs est ajouté au mélange ou à la suspension de production.

**11.** Procédé selon la revendication 10, **caractérisé en ce que** le zinc métallique est prétraité avant l'activation, dans lequel un réactif ou un mélange de réactifs choisi parmi le 1,2-dibromoéthane, l'iode, les acides organiques et/ou inorganiques, les halogénosilanes organiques et/ou inorganiques ou des mélanges de ces réactifs est ajouté à une suspension du zinc métallique dans un solvant ou un mélange de solvants organique aprotique.

**12.** Procédé selon la revendication 11, **caractérisé en ce que** le réactif ou le mélange de réactifs est choisi parmi les composés suivants ou leurs mélanges :

- l'acide acétique ou l'acide trifluoroacétique ou des mélanges de ceux-ci ;
- l'acide chlorhydrique ;
- le tétrachlorosilane ;
- le triméthylchlorosilane, le diméthyldichlorosilane ou le méthyltrichlorosilane ou des mélanges de ceux-ci.

**13.** Procédé selon au moins l'une des revendications 10 à 12, **caractérisé en ce que**, par rapport à la quantité de zinc utilisée, un total de 0,5 à 20 % en moles, de préférence de 1 à 10 % en moles, de manière particulièrement préférée de 1 à 5 % en moles de réactif ou de mélange de réactifs est utilisé.

**14.** Procédé selon au moins l'une des revendications 1 à 13, **caractérisé en ce que** des hydrocarbures, des hétérocycles, des éthers, des amines, des nitriles, des amides alipathiques ou aromatiques, ou des mélanges de ceux-ci sont utilisés comme solvants organiques aprotiques.

**15.** Procédé selon au moins l'une des revendications 1 à 14, **caractérisé en ce que** le mélange ou la suspension de production contenant la forme de zinc selon l'invention est agité(e) et/ou broyé(e) à l'abri de l'air et de l'humidité, de préférence dans une atmosphère de gaz inerte.

**16.** Procédé selon au moins l'une des revendications 1 à 15, **caractérisé en ce que** le mélange ou la suspension de production contenant la forme de zinc selon l'invention est traité(e) aux ultrasons.

**17.** Procédé selon au moins l'une des revendications 1 à 16, **caractérisé en ce que** le mélange ou la suspension de production contenant la forme de zinc selon l'invention est stocké(e), de préférence à l'abri de l'air et de l'humidité, de préférence dans une atmosphère de gaz inerte.

**18.** Procédé selon au moins l'une des revendications 1 à 17, **caractérisé en ce que** le mélange ou la suspension de production contenant la forme de zinc selon l'invention est directement utilisé(e) pour la production de composés organométalliques.

**19.** Procédé selon au moins l'une des revendications 1 à 18, **caractérisé en ce que** la forme de zinc selon l'invention est séparée des autres composants du mélange ou de la suspension de production.

**20.** Forme de zinc réalisée selon au moins l'une des revendications 1 à 19, **caractérisée en ce que** le zinc métallique hautement réactif présente une granulométrie supérieure à 2 μm, de préférence une granulométrie de 10 à 500 μm, de manière particulièrement préférée de 50 à 350 μm.

**21.** Forme de zinc selon la revendication 20, **caractérisée en ce qu'**elle n'est pas contaminée par des halogénures, des cyanures, des sulfates, des nitrates, des nitrites et/ou des acétates alcalins.

**22.** Forme de zinc selon la revendication 20 ou 21, **caractérisée en ce que**, lors de réactions d'addition oxydantes avec du bromure de n-butyle, elle offre des rendements en bromure de n-butylzinc supérieurs à 50 % sur une durée de cinq heures à des températures inférieures à 150 °C.

**23.** Forme de zinc selon au moins l'une des revendications 20 à 22, **caractérisée en ce qu'**elle offre, lors de réactions d'addition oxydantes avec du bromure de n-butyle, des rendements en bromure de n-butylzinc supérieurs ou égaux à 60 %, de préférence supérieurs ou égaux à 90 % sur une durée de 4,5 heures à des températures inférieures à 150 °C, de préférence inférieures à 100 °C, de manière particulièrement préférée à des températures inférieures ou égales à 80 °C.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4472313 A
- WO 03004504 A1
- SU 1775403 A
- DE 10024776 C
- EP 1031634 A
- WO 0102625 A1
- US 5964919 A
- WO 9315086 A1
- US 5756653 A


### In der Beschreibung aufgeführte Nicht-Patentliteratur


- **P. KNOCHEL ; P. JONES.** Organozinc Reagents. University Press Inc, 1999
- **A. FÜRSTNER.** Active Metals. VCH, 1996
- **E. ERDIK.** *Tetrahedron,* 1987, vol. 43, 2203
- **R. J. RAWSON et al.** *J. Org. Chem.,* 1970, vol. 35, 2057
- **C. GOSMINI.** *J. Am. Chem. Soc.,* 2003, vol. 125, 3867
- **C. GOSMINI.** *Tetrahedron Lett.,* 2003, vol. 44, 6417
- **I. V. EREMEEV.** *Rus. J. Appl. Chem.,* 2001, vol. 74, 1410
- **H. FILLON et al.** *Tetrahedron Lett.,* 2001, vol. 42, 3843
- **C. GOSMINI et al.** *J. Org. Chem.,* 2000, vol. 65, 6024
- **P. KNOCHEL, P. JONES.** Organozinc Reagents. University Press Inc, 1999
- **R. D. RIEKE et al.** *J. Chem. Soc. Chem. Commun.,* 1973, vol. 269
- **R. D. RIEKE et al.** *Tetrahedron,* 1997, 1925
- **R. D. RIEKE et al.** *J. Org. Chem.,* 1996, vol. 61, 2726
- **L. ZHU et al.** *J. Org. Chem.,* 1991, vol. 56, 1445